# EUROPEAN PATENT SPECIFICATION

(11) **EP 1 282 273 B1**
(45) Date of publication and mention of the grant of the patent: **25.07.2007**
(21) Application number: 02015993.5
(22) Date of filing: 18.07.2002
(51) Int. Cl.: H04L 12/40, H04L 29/14, H04L 12/44, B60R 16/02

(54) **A system for the controlled exclusion of branches of a serial communication network in an electronic control system for onboard devices of motor vehicles**
System zur gesteuerten Abschaltung von Zweigen eines seriellen Kommunikationssytems in einem elektronischen Steuersystem für Bordgeräte eines Kraftfahrzeugs
Un système pour l'exclusion controlée de branches d'un réseau de communication en série dans un système de controle électronique pour des dispositifs embarqués de véhicules à moteur

(30) Priority: 03.08.2001 IT TO20010780
(43) Date of publication of application: 05.02.2003
(73) Proprietor: MAGNETI MARELLI SISTEMI ELETTRONICI S.p.A., 20011 Corbetta (Milano) (IT)
(72) Inventor: Borin, Andrea, 29015 Castel San Giovanni (Piacenza) (IT)
(74) Representative: Deambrogi, Edgardo

(56) References cited:
- EP-A- 0 503 170
- DE-A- 19 810 291
- US-A- 5 903 565
- US-A- 6 115 831

## Description

The present invention relates to a distributed electronic system for the control of on board devices of motor vehicles according to the preamble of Claim 1, and more specifically, a system for the controlled exclusion of branches of a serial communication network in such a control system.

In a control system of distributed type a plurality of electronic control units are installed on board a motor vehicle to improve the management of functions of the passenger compartment or the motor vehicle body. Some of these supervise the management of a plurality of circuit modules for driving on board devices through serial communication networks which utilise specific communication protocols.

For example, it is known in the art to connect to one central electronic unit several driving circuits for the control of the on board devices of a specific area, or intended for a specific vehicle function, via a single local interconnection network (LIN). Advantageously this network has a low speed serial transmission protocol (at most 20 kbit/s) of the master/slave type, in which for each section of network a single node can operate as a master node and up to 16 slave nodes can be present.

The electronic control unit manages a serial network via a single communication line (physical and logical) with which there are associated different peripheral circuit branches. Each branch can in turn be a single communication line to a single circuit module, or a communication bus to a subset of circuit modules.

A serial network of this type is simple, low cost and reliable.

In the architecture of a network formed with single wire serial communication lines (for example, but not exclusively, the LIN networks) and having a single physical communication line with the respective control unit, the principal disadvantage is given by the fact that a failure of one of the on board devices, or in a section of wiring, which involves a short circuit condition to ground or to the supply, causes interruption and makes it impossible to maintain communication with all the controlled modules of this network.

This can happen, for example, if the network connects the driving circuit modules for the rear lights to a boot space control unit. In the case of small impacts damage can occur to a light and give rise to a short circuit to ground in the associated branch of the network, following which the control unit sees the entire network short circuited to ground and loses the possibility of communicating with the other driving modules connected to it. Consequently the passenger compartment and/or body work functions managed by such modules are lost even if they have not been damaged.

In many cases this loss of functionality is not acceptable. For instance there are law provisions which provide for the maintenance of some basic functions, or there is the necessity of guaranteeing that the user of the vehicle has available the greatest possible number of passenger compartment and body work functions even in the case of failures, especially for prestige motor vehicles.

For example, in the case of damage of a single rear lamp and loss of serial communication, it is not acceptable to have to lose both the rear direction lights.

Prior art arrangements, consisting in the arrangement of additional dedicated communication lines or duplicating the entire network are economically disadvantageous.

A further disadvantage is represented by the residual current in the network even when this is in an inactive state, for example when the vehicle is at rest, since the biasing networks of the on board devices, which are always connected to the control unit, contribute to the consumption of at least a minimum idle current.

For example, DE 198 10 291 discloses a controllable data bus for a plurality of nodes, e.g. in a vehicle, where the nodes can be selectively disconnected. A plurality of receiving/transmitting modules is coupled to respective nodes. A logical decision element is arranged to receive signals from the receiving/transmitting modules associated with the nodes and to output a control signal to said plurality of modules. An addressable switch intercepts the signal output by the decision element to the receiving/transmitting modules and is arranged to pass or overwrite it according to a selection made by means of the microcontroller, thus enabling or disconnecting the corresponding module.

Here, a plurality of receiving/transmitting modules is provided for managing communications between the nodes in a vehicle and a further separate control unit is adopted to connect/disconnect a desired node by controlling the respective receiving/transmitting module.

US 5 903 565 discloses a serial bus system operating with arbitration for independently communicating with, and controlling individual bus systems. A plurality of individual bus systems is connected to corresponding drivers, and error detection is combined with switching logic to disable faulty individual bus systems without affecting the other connected bus systems.

A bus transmitting unit and a bus receiving unit are provided for each one of the individual bus systems, and their functions may be enabled or disabled independently for each bus system by means of a control signal output from a respective processing unit associated with the bus system, based on error signals output from corresponding error detectors provided for each individual bus system.

The object of the present invention therefore is to provide a satisfactory solution to the problems explained above, by avoiding the disadvantages of the prior art. According to the present invention this object is achieved by a system for the controlled exclusion of branches of a serial communication network having the characteristics set out in Claim 1.

Particular embodiments of the invention are defined in the dependent claims.

In summary, the present invention is based on the principle of being able to control continuously the state of the branches of a serial communication network which connect a plurality of driving modules for on board devices with a control unit through a single physical communication line, and, in the case of a failure, of excluding the branch involved in the failure whilst maintaining communication with the other branches.

This type of dialogue, in the case of networks with master/slave protocol (for example LIN networks) is performed by the master module, that is to say the control unit.

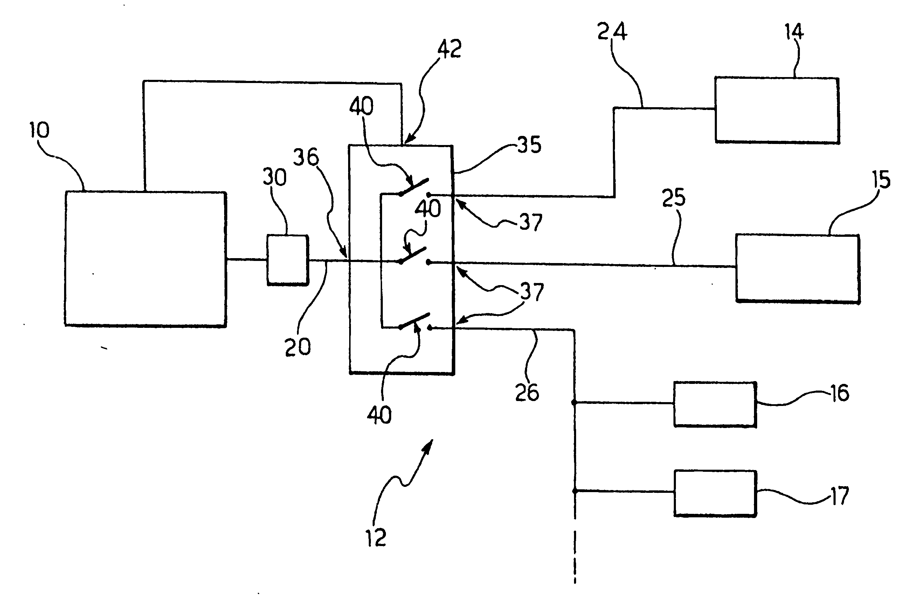

Further characteristics and advantages of the invention will be explained in more detail in the following detailed description of a preferred embodiment given by way of non-limitative example, with reference to the attached drawing, which shows a circuit block diagram of a control system for devices on board motor vehicles provided with a system for controlled exclusion of the branches of a serial communication network according to the invention.

An electronic control unit is indicated 10. It is formed as a microcontroller integrated on board an electronic module for management of passenger compartment and/or bodywork functions of a motor vehicle, which can be for example, a module for the management of the boot space functions.

A serial communication network LIN 12 connects to the microcontroller 10 a plurality of circuit driving modules 14, 15, 16, 17 arranged for the control of corresponding on board devices, in the example devices localised in the rear zone of the vehicle.

The network 12 comprise a single physical communication line 20 on the control unit side, and a plurality of peripheral branches 24, 25, 26 for connection to the circuit modules 14, 15, 16 and 17.

The communication line 20 is coupled to the microcontroller 10 by means of a receiver/transmitter device 30.

An interface circuit 35, the subject of the invention, is interposed between the communication line 20 and the branches 24-26 of the network 12 in correspondence with a common network node. It comprises a first terminal 36 to which the communication line 20 which leads to the microcontroller 10 is connected, and a plurality of second terminals 37 disposed on the opposite side and intended to be connected to the peripheral branches 24-26 of the network 12.

The interface circuit 35 includes a plurality of switching devices 40, the number corresponding to the number of peripheral branches of the network 12, and has a selection input 42 which is coupled to the microcontroller 10.

The electronic control unit 10 is preferably employed as a master module of the LIN network and physically and logically manages the single serial communication line 20 with LIN protocol. Moreover, it manages the connection of each branch 24-26 via the interface circuit 35, sending control signals to the input 42 for selectively switching the switching devices 40 to the open or closed position.

In normal operation the switching devices 40 are controlled to be in the closed position so as to guarantee the connection of all branches 24-26 to the microcontroller 10 via the communication line 20.

If a failure occurs in one of the circuit modules 14-17 the microcontroller 10 initially loses communication with all the modules.

Since it effects a continuous supervision of the network 12 through the same connection branches and the communication protocol adopted, it is able to perceive the failure situation, for example, when it receives no response following interrogation of one of its slave modules.

In this eventuality the microcontroller selectively controls opening of the switching devices 40, one at a time, thus excluding from the network the corresponding branch, and verifies at each operation if the correct functioning conditions are restored. Upon exclusion of the peripheral branch in which the failure has occurred reinstatement of the correct functioning of the part of the network 12 connected to the microcontroller will occur. In this condition the microcontroller 10 is conveniently arranged to maintain the branch of the network in which the failure has occurred disconnected, and to generate a corresponding alarm signal, and to restore communication, regularly communicating with the modules of the on board devices connected to the branches retaining their integrity.

In an alternative manner of operation, the microcontroller 10 can selectively exclude one or more branches from the network 12 when the vehicle is at rest, preventing the flow of current (even the biasing current) towards those on board devices which do not have to remain always active (maintaining supplied the devices intended to wake up the network from a low consumption condition).

Advantageously, the microcontroller is arranged to exclude the connection to all the modules except one, to guarantee a wake up procedure of the system. A system wake up signal following activation of the vehicle (or of the alarm system, for example) causes reinstatement of all the connections to the peripheral branches by the microcontroller, arranged to act by controlling the closure of the switch devices 40 normally open in rest conditions.

The interface circuit 35 can be integrated in a single electronic module also including the microcontroller 10, and this module will therefore have a plurality of external connection terminals the number of which corresponds to the number of branches of the network 12.

Alternatively, the interface circuit 35 can be formed on a separate electronic module from the module including the microcontroller 10, with a pair of terminals at the output from the microcontroller module, respectively a communication terminal for connection to the single physical communication line 20, and a control terminal for connection to the selection input 42 of the circuit 35.

Naturally, the principle of the invention remaining the same, the embodiments and details of construction can be widely varied with respect to what has been described and illustrated purely by way of non-limitative example, without by this departing from the scope of the present invention as defined in the attached claims.

## Claims

1. A system for controlled exclusion of branches of a serial communication network in an electronic control system for on board devices of motor vehicles, the said electronic control system comprising at least one electronic control unit (10) intended for managing the passenger compartment and/or bodywork functions, which is connected to a plurality of x driving circuit modules (14-17) of the on board devices through a serial communication network (12), in which the driving modules (14-17) of the on board devices are each connected by a respective peripheral communication branch (24-26) to a common node of the network (12), and from there to the electronic control unit (10) through a single main physical communication line (20),
**characterised in that** a single receiver/transmitter device (30) is interposed along the main communication line (20) to communicate over said line with the on board devices driving modules (14-17) for managing said passenger compartment and/or bodywork functions, and **in that** the system for controlled exclusion of branches comprises an interface circuit (35) interposed between the said main communication line (20) and the branches (24-26) of the network (12) at the said common node, the said circuit (35) including a plurality of controlled switching devices (40) corresponding in number to the number of branches (24-26) of the network (12) and operable selectively by the electronic control unit (10) to interrupt the connection of one or more peripheral communication branches (24-26) to the main communication line (20).

2. A system according to Claim 1, **characterised in that** the said interface circuit (35) has a pair of terminals (36, 42) for connection to the control unit (10), respectively a signal terminal (36) for connection to the main communication line (20) and a selection terminal (42) for determining the open and/or closure condition of the switching devices (40) by the said unit (10).

3. A system according to Claim 2, **characterised in that** the said interface circuit (35) has a plurality of terminals (37) for connection to the peripheral communication branches (24-26), corresponding in number to the number of branches (24-26) of the network (12).

4. A system according to Claim 2 or 3, **characterised in that** the said interface circuit (35) is integrated in an electronic module including the control unit (10), the said module having a plurality of external connection terminals corresponding in number to the number of peripheral communication branches (24-26).

5. A system according to Claim 2 or 3, **characterised in that** the said interface circuit (35) is formed in a first electronic module, the control unit (10) being formed in a second module having a pair of terminals, respectively a communication terminal for connection to the main communication line (20) and a control terminal for connection to a selection terminal (42) of the interface circuit (35).

6. A system according to any preceding Claim, in which the control unit (10) is arranged to set the switching devices (40) of the interface circuit (35) in a closure position when the control system is in an activation condition, and to drive the said devices (40) selectively and in succession to an open position upon recognition of a condition of loss of communication with the driving modules (14-17) of the on board devices.

7. A system according to Claim 6, **characterised in that** the control unit (10) is arranged to:
recognise a condition of reinstatement of communication with the driving modules (14-17) of the on board devices and
maintain in an open position a switching device (40), where the closure position of said device involves loss of communication.

8. A system according to any preceding claim, **characterised in that** the control unit (10) is arranged to set the switching devices (40) of the interface circuit (35) to an open position in a condition of disactivation of the control system, and to maintain in the closure position one of the said devices (40) having functions of supervision and reactivation of the said system.

## Patentansprüche

1. System zum kontrollierten Abschalten von Zweigen eines seriellen Kommunikationsnetzes in einem elektronischen Steuersystem für Bordgeräte von Kraftfahrzeugen, wobei das elektronische Steuersystem zumindest eine elektronische Steuereinheit (10) umfasst, die zum Verwalten der Funktionen des Fahrgastraums und/oder der Karosserie bestimmt ist und durch ein serielles Kommunikationsnetz (12) mit einer Mehrzahl von Antriebsschaltmodulen (14-17) der Bordgeräte verbunden ist, wobei die Antriebsmodule (14-17) der Bordgeräte jeweils durch einen peripheren Kommunikationszweig (24-26) an einem gemeinsamen Knoten des Netzwerks (12) und von dort durch eine einzelne physikalische Hauptübertragungsleitung (20) an der elektronischen Steuereinheit (10) angeschlossen sind,
**dadurch gekennzeichnet, dass** eine einzelne Empfänger/Sender-Vorrichtung (30) entlang der Hauptübertragungsleitung (20) eingeschaltet ist, um zwecks Verwaltung der Funktionen des Fahrgastraums und/oder der Karosserie über diese Leitung mit den Antriebsmodulen (14-17) der Bordgeräte zu kommunizieren, und dass das System zum kontrollierten Abschalten von Zweigen eine Schnittstellenschaltung (35) umfasst, die zwischen der Hauptübertragungsleitung (20) und den Zweigen (24-26) des Netzwerks (12) am gemeinsamen Knoten eingeschaltet ist, wobei die Schaltung (35) eine Mehrzahl von gesteuerten Schaltvorrichtungen (40) umfasst, die mit der Anzahl der Zweige (24-26) des Netzwerks (12) zahlenmäßig übereinstimmen und dazu betriebsfähig sind, die Verbindung eines oder mehrerer peripherer Kommunikationszweige (24-26) mit der Hauptübertragungsleitung (20) durch die elektronische Steuereinheit (10) gezielt zu unterbrechen.

2. System gemäß Anspruch 1, **dadurch gekennzeichnet, dass** die Schnittstellenschaltung (35) ein Paar von Anschlussklemmen (3 6, 42) zur Verbindung mit der Steuereinheit (10) aufweist, und zwar eine Signalklemme (36) zur Verbindung mit der Hauptübertragungsleitung (20) und eine Auswahlklemme (42) zum Bestimmen des offenen Zustands und/oder des Verschlusszustands der Schaltvorrichtungen (40) durch die Einheit (10).

3. System gemäß Anspruch 2, **dadurch gekennzeichnet, dass** die Schnittstellenschaltung (35) eine Mehrzahl von Anschlussklemmen (37) zur Verbindung mit den peripheren Kommunikationszweigen (24-26) aufweist, welche mit der Anzahl der Zweige (24-26) des Netzwerks (12) zahlenmäßig übereinstimmen.

4. System gemäß Anspruch 2 oder 3, **dadurch gekennzeichnet, dass** die Schnittstellenschaltung (35) in einem elektronischen Modul, das die Steuereinheit (10) einschließt, integriert ist, wobei das Modul eine Mehrzahl von externen Verbindungsklemmen aufweist, die mit der Anzahl der peripheren Kommunikationszweige (24-26) zahlenmäßig übereinstimmen.

5. System gemäß Anspruch 2 oder 3, **dadurch gekennzeichnet, dass** die Schnittstellenschaltung (35) in einem ersten elektronischen Modul gebildet ist, wobei die Steuereinheit (10) in einem zweiten Modul gebildet ist, das ein Paar von Anschlussklemmen aufweist, und zwar eine Kommunikationsklemme zur Verbindung mit der Hauptübertragungsleitung (20) und eine Steuerklemme zur Verbindung mit einer Auswahlklemme (42) der Schnittstellenschaltung (35).

6. System gemäß irgendeinem vorhergehenden Anspruch, wobei die Steuereinheit (10) dazu eingerichtet ist, die Schaltvorrichtungen (40) der Schnittstellenschaltung (35) in eine Verschlussstellung zu bringen, wenn sich das Steuersystem in einem Aktivierungszustand befindet, und diese Vorrichtungen (40) beim Erkennen eines Zustands eines Verlusts der Kommunikation mit den Antriebsmodulen (14-17) der Bordgeräte gezielt und hintereinander in eine offene Stellung zu treiben.

7. System gemäß Anspruch 6, **dadurch gekennzeichnet, dass** die Steuereinheit (10) dazu eingerichtet ist, um:
einen Zustand der Wiederherstellung der Kommunikation mit den Antriebsmodulen (14-17) der Bordgeräte zu erkennen, und
eine Schaltvorrichtung (40) in einer offenen Stellung zu halten, wobei die Verschlussstellung der Vorrichtung einen Verlust an Kommunikation zur Folge hat.

8. System gemäß irgendeinem vorhergehenden Anspruch, **dadurch gekennzeichnet, dass** die Steuereinheit (10) dazu eingerichtet ist, die Schaltvorrichtungen (40) der Schnittstellenschaltung (35) in einem Zustand der Deaktivierung des Steuersystems in eine offene Stellung zu bringen und eine der Vorrichtungen (40), die Funktionen der Überwachung und Reaktivierung des Systems ausüben, in der Verschlussstellung zu halten.

## Revendications

1. Système pour l'exclusion contrôlée de branches d'un réseau de communication série dans un système de contrôle électronique pour des dispositifs embarqués de véhicules à moteur, ledit système de contrôle électronique comprenant au moins une unité de contrôle électronique (10) destinée à gérer l'habitacle et/ou des fonctions de carrosserie, qui est connecté à une pluralité de modules de circuits de commande (14 à 17) des dispositifs embarqués par l'intermédiaire d'un réseau de communication série (12), dans lequel les modules de commande (14 à 17) des dispositifs embarqués sont connectés chacun par une branche de communication périphérique (24 à 26) respective à un noeud commun du réseau (12), et de là à l'unité de contrôle électronique (10) par l'intermédiaire d'une ligne de communication physique principale (20) unique,
**caractérisé en ce qu'**un dispositif récepteur/émetteur (30) unique est interposé le long de la ligne de communication principale (20) pour communiquer sur ladite ligne avec les modules de commande (14 à 17) des dispositifs embarqués pour gérer lesdits habitacle et/ou fonctions de carrosserie, et **en ce que** le système pour l'exclusion contrôlée de branches comprend un circuit d'interface (35) interposé entre ladite ligne de communication principale (20) et les branches (24 à 26) du réseau (12) au niveau dudit noeud commun, ledit circuit (35) comprenant une pluralité de dispositifs de commutation (40) contrôlés en un nombre correspondant au nombre de branches (24 à 26) du réseau (12) et pouvant être mis en oeuvre de manière sélective par l'unité de contrôle électronique (10) pour interrompre la connexion d'une ou de plusieurs branches de communication périphériques (24 à 26) à la ligne de communication principale (20).

2. Système selon la revendication 1, **caractérisé en ce que** ledit circuit d'interface (35) a deux bornes (36, 42) pour une connexion à l'unité de contrôle (10), respectivement une borne de signal (36) pour une connexion à la ligne de communication principale (20) et une borne de sélection (42) pour déterminer la condition d'ouverture et/ou de fermeture des dispositifs de commutation (40) par ladite unité (10).

3. Système selon la revendication 2, **caractérisé en ce que** ledit circuit d'interface (35) a une pluralité de bornes (37) pour une connexion aux branches de communication périphériques (24 à 26), en un nombre correspondant au nombre de branches (24 à 26) du réseau (12).

4. Système selon la revendication 2 ou 3, **caractérisé en ce que** ledit circuit d'interface (35) est intégré dans un module électronique comprenant l'unité de contrôle (10), ledit module ayant une pluralité de bornes de connexion externes en un nombre correspondant au nombre de branches de communication périphériques (24 à 26).

5. Système selon la revendication 2 ou 3, **caractérisé en ce que** ledit circuit d'interface (35) est formé dans un premier module électronique, l'unité de contrôle (10) est formée dans un deuxième module ayant deux bornes, respectivement une borne de communication pour une connexion à la ligne de communication principale (20) et une borne de contrôle pour une connexion à une borne de sélection (42) du circuit d'interface (35).

6. Système selon l'une quelconque des revendications précédentes, dans lequel l'unité de contrôle (10) est agencée pour mettre les dispositifs de commutation (40) du circuit d'interface (35) dans une position de fermeture lorsque le système de contrôle est dans une condition d'activation, et pour commander lesdits dispositifs (40) de manière sélective et successivement dans une position d'ouverture lors de la reconnaissance d'une condition de perte de communication avec les modules de commande (14 à 17) des dispositifs embarqués.

7. Système selon la revendication 6, **caractérisé en ce que** l'unité de contrôle (10) est agencée pour :
reconnaître une condition de rétablissement de communication avec les modules de commande (14 à 17) des dispositifs embarqués, et
maintenir dans une position d'ouverture un dispositif de commutation (40), où la position de fermeture dudit dispositif implique une perte de communication.

8. Système selon l'une quelconque des revendications précédentes, **caractérisé en ce que** l'unité de contrôle (10) est agencée pour mettre les dispositifs de commutation (40) du circuit d'interface (35) dans une position d'ouverture dans une condition de désactivation du système de contrôle, et pour maintenir dans la position de fermeture l'un desdits dispositifs (40) ayant des fonctions de supervision et de réactivation dudit système.
